# EUROPEAN PATENT APPLICATION

(11) **EP 1 693 574 A1**
(43) Date of publication of application: **23.08.2006**
(21) Application number: 04819319.7
(22) Date of filing: 18.11.2004
(51) Int. Cl.: F04D 29/30, F04D 23/00

(54) **IMPELLER OF MIXED FLOW COMPRESSOR**

(30) Priority: 28.11.2003 JP 2003398578
(71) Applicant: MITSUBISHI HEAVY INDUSTRIES, LTD., Tokyo 108-8215 (JP)
(72) Inventor: HIGASHIMORI, Res&Dev./Mitsubishi Heavy Ind Ltd, Nagasaki-shi, Nagasaki (JP); KUMA, H., Nagasaki Res&Dev/Mitsubishi Heavy Ind, Nagasaki-shi, Nagasaki (JP); SUMIDA, K., Nagasaki Res&Dev/Mitsubishi Heavy Ind, Nagasaki-shi, Nagasaki (JP); SUITA, T., Nagasaki Res&Dev/Mitsubishi Heavy Ind, Nagasaki-shi, Nagasaki (JP)
(74) Representative: Intes, Didier Gérard André
(86) International application number: PCT/JP2004/017163
(87) International publication number: WO 2005/052376

(57) **Abstract**

An object is to provide an impeller (10) which can suppress or prevent reversed flow of a fluid within a diffuser and raise the efficiency of a mixed flow compressor. In an impeller of a mixed flow compressor that has a plurality of blades (11), and a hub (12) disposed at the root of this plurality of blades, and in which the surface of the hub on which trailing edges (TE) of the plurality of blades are located, is inclined with respect to a rotation axis (C) in a plane that includes the rotation axis, the trailing edges of the plurality of blades are formed so that they are positioned on a line approximately parallel to an axis of rotation of the hub.

## Description

### [Technical Field]

The present invention relates to an impeller of a mixed flow compressor employed in mixed flow compressors such as gas turbines for aviation use.

### [Background Art]

Impellers employed in conventional mixed flow compressors are configured such that the trailing edge of the blade is approximately perpendicular with respect to the surface of an inclined hub (see for example, Patent Document 1).
[Patent Document 1] Japanese Unexamined Patent Application, First Publication No. 2001-336498, FIG. 5 (b)).

### [Disclosure of Invention]

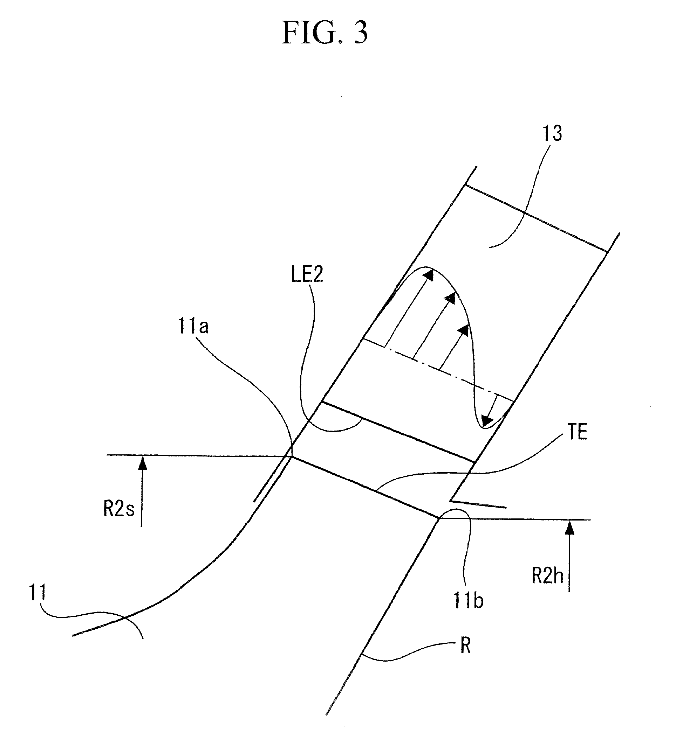

However, with this conventional mixed flow compressor impeller, since the trailing edge of the blade is provided so as to be approximately perpendicular with respect to the surface of the inclined hub, there is a problem in that distortion (differences in velocity) occurs in the flow velocity of the fluid passing through the impeller along the height direction of the blade.
That is to say, as shown in FIG. 3, a distance R2s from the axis of rotation of the impeller to a tip 11a of a trailing edge of a blade 11 is proportionately much greater than a distance R2h from the axis of rotation of the impeller to a root 11b of the trailing edge of the blade 11. Therefore, the flow energy of the fluid flowing from the impeller outlet (trailing edge TE of the blade 11) differs considerably between the tip 11a of the trailing edge of the blade 11 and the root 11b of the trailing edge of the blade 11, and pressure at the tip 11a of the trailing edge of the blade 11 wherein flow energy is high is increased, and pressure at the root 11b of the trailing edge of the blade 11 wherein flow energy is low is reduced. As a result, as shown by the arrows in FIG. 3, at a position in a diffuser 13 opposite the root 11b of the trailing edge of the blade 11, flow velocity is reduced and distortion occurs in the flow velocity. In some cases there is a problem in that reversed flow occurs, hindering pressure increase in the mixed flow compressor, and reducing compression efficiency.

The present invention takes into consideration the above situation, with an object of providing an impeller which can suppress or prevent the occurrence of distortion of flow velocity, and reversed flow, of a fluid within the diffuser, and raise the efficiency of a mixed flow compressor.

The present invention employs the following solutions to resolve the aforementioned problem.
The impeller of a mixed flow compressor according to the present invention is one where in an impeller of a mixed flow compressor that has a plurality of blades, and a hub disposed at the root of this plurality of blades, and in which the surface of the hub on which trailing edges of the plurality of blades are located is inclined with respect to a rotation axis in a plane that includes the rotation axis, the trailing edges of the plurality of blades are formed so that they are positioned on a line approximately parallel to an axis of rotation of the hub.
According to such an impeller of a mixed flow compressor, the distance from the axis of rotation of the impeller to the trailing edge of the blade is approximately equal along the height direction of the blade. Therefore the flow energy of the fluid flowing from the impeller outlet (trailing edge of the blade) is approximately uniform along the height direction of the blade.

The mixed flow compressor of the present invention is one where in a mixed flow compressor that has the aforementioned impeller, and a diffuser provided downstream of the impeller, a leading edge of the diffuser is formed so that it is positioned on a line approximately parallel to a line formed by the trailing edges of the plurality of blades.
According to such a mixed flow compressor, the fluid flowing from the trailing edge of the blade reaches the leading edge of the diffuser approximately simultaneously along the height direction of the blade, and subsequently passes through the diffuser.

A gas turbine engine according to the present invention is provided with the aforementioned impeller, or the aforementioned mixed flow compressor.
According to such a gas turbine engine, fluid having a velocity component approximately uniform along the height direction of the blade flows from the impeller.

The present invention demonstrates the following benefits.
The flow velocity of the fluid flowing from the impeller can be made approximately uniform along the height direction of the blade, and the occurrence of distortion of flow velocity (differences in velocity) of the fluid flowing from the impeller can be suppressed. That is to say, the flow energy of the fluid flowing from the impeller outlet (trailing edge of the blade) can be made approximately equal from the tip of the trailing edge of the blade to the root of the trailing edge of the blade, the flow energy of the fluid flowing from the impeller can be made approximately equal along the height direction of the blade, and the occurrence of distortion of flow velocity and reversed flow of the fluid within the diffuser positioned downstream, can be suppressed.
Furthermore, reduction in pressure of the mixed flow compressor can be prevented, and reduction in compression efficiency can be prevented.
Moreover, the compression efficiency of a gas turbine engine can be improved, and output can be raised.

### [Brief Description of Drawings]

[FIG. 1] A section view of the essential components of a mixed flow compressor provided with an impeller according to the present invention.
[FIG. 2] An enlarged view of the essential components within the circle A in FIG. 1.
[FIG. 3] An enlarged view showing the essential components of the outlet of a conventional impeller.

### [Best Mode for Carrying Out the Invention]

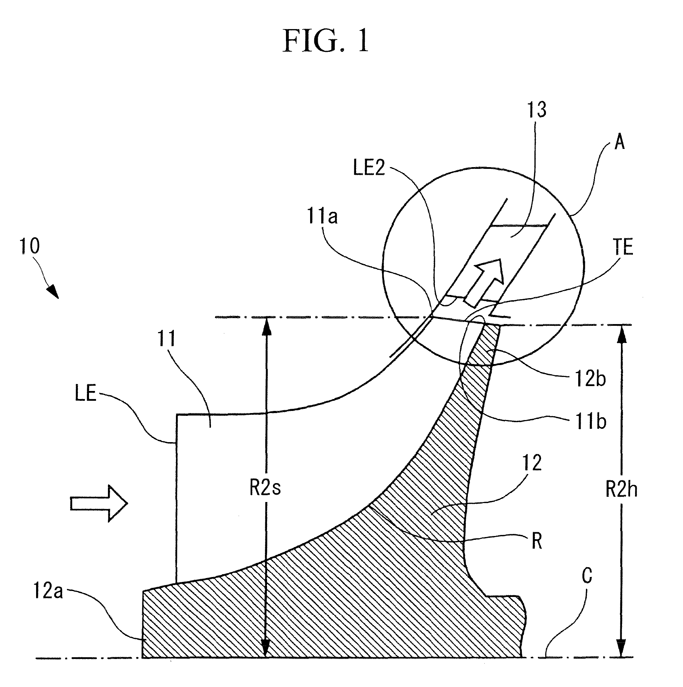

One embodiment of an impeller of a mixed flow compressor according to the present invention is described hereunder with reference to the drawings.
As shown in FIG. 1, an impeller 10 according to the present embodiment comprises, as the primary elements, a plurality of blades 11, and a hub 12 disposed at a root R of these blades 11.
The blades 11 are respectively provided on the surface of the hub 12 such that a leading edge LE is positioned at a small-diameter end 12a of the hub 12, and a trailing edge TE is positioned at a large-diameter end 12b of the hub 12.

Furthermore, a trailing edge TE of each blade 11 is formed so that a distance R2s from an axis of rotation C of the impeller 10 to a tip 11a of the trailing edge of the blade 11, and a distance R2h from the axis of rotation C of the impeller 10 to a root 11b of the trailing edge of the blade 11, are approximately equal.

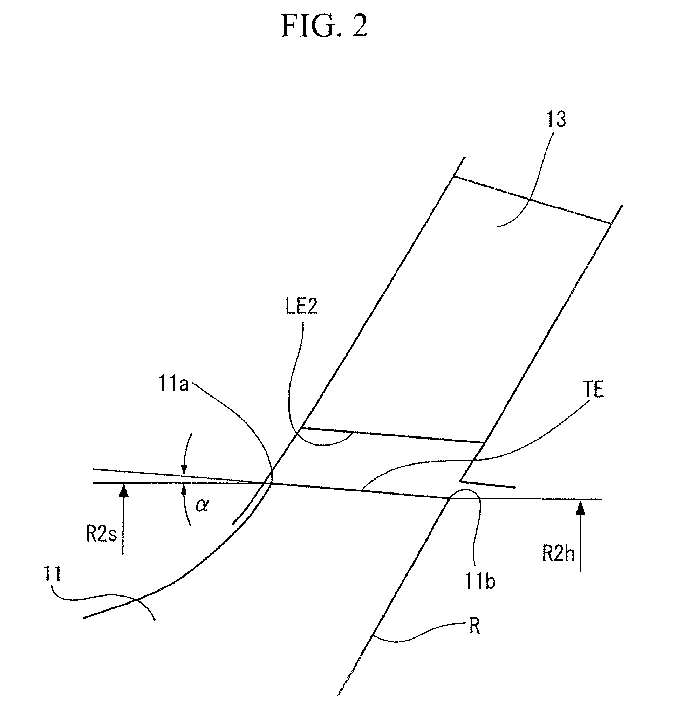

FIG. 2 is an enlarged view of the essential components within the circle A in FIG. 1. From this drawing it is seen that for the trailing edge TE of the blade 11 of the present embodiment, the distance R2s from the axis of rotation C of the impeller 10 to the tip 11a of the trailing edge of the blade 11 is slightly greater than the distance R2h from the axis of rotation C of the impeller 10 to the root 11b of the trailing edge of the blade 11.

In this way, by making the distance R2s from the axis of rotation C of the impeller 10 to the tip 11a of the trailing edge of the blade 11, and the distance R2h from the axis of rotation C of the impeller 10 to the root 11b of the trailing edge of the blade 11 approximately equal, that is to say, by forming the trailing edge TE of the blade 11 so as to be positioned on a line approximately parallel to the axis of rotation C of the hub 12, the flow velocity of the fluid flowing from the impeller 10 can be made approximately uniform along the height direction of the blade 11, and the occurrence of distortion of flow velocity (differences in velocity) of the fluid flowing from the impeller 10 can be suppressed.
In other words, the flow energy of the fluid flowing from the impeller 10 outlet (the trailing edge TE of the blade 11) becomes approximately equal at the tip of the trailing edge 11a of the blade 11, and the root 11b of the trailing edge of the blade 11, the flow energy of the fluid passing through the impeller 10 along the height direction of the blade becomes approximately equal, and reversed flow of the fluid within the diffuser positioned on the downstream side can be suppressed.

It is desirable that the distance R2s from the axis of rotation C of the impeller 10 is between 1.0 and 1.05 times the distance R2h from the axis of rotation C of the impeller 10 to the root 11b of the trailing edge of the blade 11.
Moreover, in the same way, when regulated by angle, it is desirable that an angle α between a line parallel to the axis of rotation C of the impeller 10, and the trailing edge TE of the blade 11 is between 0° and +10°. Here, 1.0 and 0° represent a condition in which the distance R2s from the axis of rotation C of the impeller 10 to the tip 11a of the trailing edge of the blade 11 is equal to the distance R2h from the axis of rotation C of the impeller 10 to the root 11b of the trailing edge of the blade 11. Positive (+) represents a condition in which the distance R2s from the axis of rotation C of the impeller 10 to the tip 11a of the trailing edge of the blade 11 is greater than the distance R2h from the axis of rotation C of the impeller 10 to the root 11b of the trailing edge of the blade 11. Therefore, α shown in FIG. 2 shows a positive range.

When the distance R2s from the axis of rotation C of the impeller 10 to the tip 11a of the trailing edge of the blade 11, and the distance R2h from the axis of rotation C of the impeller 10 to the root 11b of the trailing edge of the blade 11 are equal, that is to say, when the trailing edge TE of the blade 11 is formed so that it is positioned on a line parallel to the axis of rotation C of the hub 12, the flow energy of the fluid flowing from the impeller 10 outlet (trailing edge TE of the blade 11) becomes equal at the tip of the trailing edge 11a of the blade 11 and the root 11b of the trailing edge of the blade 11, the flow energy of the fluid flowing through the impeller 10 is equal at all points along the height direction of the blade 11, and reversed flow of the fluid within the diffuser positioned downstream can be prevented.

Reference symbol 13 in FIG. 1 and FIG. 2 indicates a guide vane (stator) provided in the diffuser, that is to say, the downstream casing of the mixed flow impeller. The fluid flowing through the impeller 10 is introduced (guided) to the downstream side by the diffuser 13, and the kinetic energy of the fluid is converted to pressure energy.
It is desirable that a leading edge LE2 of the diffuser 13 and the trailing edge TE of the blade 11 are formed approximately parallel.

By forming the leading edge LE2 of the diffuser 13, and the trailing edge TE of the blade 11 approximately parallel in this manner, the fluid flowing from the tip 11a of the trailing edge of the blade 11, and the fluid flowing from the root 11b of the trailing edge of the blade 11 reach the leading edge LE2 of the diffuser 13 approximately simultaneously, and pass through the diffuser 13. Therefore, the fluid can flow smoothly without turbulence, and reduction in pressure of the mixed flow compressor can be prevented, and reduction in compression efficiency can be prevented.

Furthermore, in a gas turbine engine provided with the aforementioned impeller 10, or mixed flow compressor, reversed flow in the diffuser positioned downstream can be suppressed or prevented. Moreover, since turbulence in the fluid when passing through the diffuser is prevented, and reduction in pressure of the mixed flow compressor is prevented, compression efficiency can be improved and output can be raised.

## Claims

1. An impeller (10) of a mixed flow compressor that has a plurality of blades (11), and a hub (12) disposed at the root ® of this plurality of blades, and in which the surface of said hub on which trailing edges (TE) of said plurality of blades are located is inclined with respect to a rotation axis (C) in a plane that includes the rotation axis, wherein
the trailing edges of said plurality of blades are formed so that they are positioned on a line approximately parallel to an axis of rotation of said hub.

2. A mixed flow compressor that has the impeller according to claim 1, and a diffuser (13) provided downstream of said impeller (10), wherein
a leading edge (LE2) of said diffuser is formed so that it is positioned on a line approximately parallel to a line formed by the trailing edges (TE) of said plurality of blades.

3. A gas turbine engine provided with the impeller (10) according to claim 1.

4. A gas turbine engine provided with the mixed flow compressor according to claim 2.
